# EUROPÄISCHE PATENTANMELDUNG

(11) **EP 2 101 078 A2**
(43) Veröffentlichungstag der Anmeldung: **16.09.2009**
(21) Anmeldenummer: 09002920.8
(22) Anmeldetag: 02.03.2009
(51) Int. Cl.: F16F 9/348, F16F 9/512

(54) **Dämpfereinheit**

(30) Priorität: 10.03.2008 DE 102008013359
(71) Anmelder: Gustav Magenwirth GmbH & Co. KG, 72574 Bad Urach (DE)
(72) Erfinder: Lüde, Dirk, 80798 München (DE)
(74) Vertreter: Maucher, Wolfgang

(57) **Zusammenfassung**

Die Erfindung bezieht sich auf eine Dämpfereinheit für eine Federgabel oder ein Dämpferbein, insbesondere für Fahrräder, mit einem mit Dämpfungsfluid (5) gefüllten Dämpfungsraum (4), mit einem Zugstufenkolben (8) zur Dämpfung der Zugstufe, der in den Dämpfungsraum (4) eingreift und relativ zu diesem beweglich ist und mit einem Reservoir (14), zur Aufnahme von verdrängtem Dämpfungsfluid beim Einfedern. Für die vorliegende Erfindung ist kennzeichnend, dass in dem Dämpfungsraum (4) ein Druckstufenkolben (16) zur Dämpfung der Druckstufe angeordnet ist. Durch die Anordnung der Druckstufendämpfung in Form eines Druckstufenkolbens innerhalb des Dämpfungsraumes wird der Aufbau der Dämpfereinheit wesentlich vereinfacht, da das Dämpfungsfluid nicht mehr durch einen Kanal in der Zugstufen-Kolbenstange zu dem entfernt sitzenden Druckstufendämpfer geführt werden muss. (Fig. 1)

## Beschreibung

Die Erfindung bezieht sich auf eine Dämpfereinheit insbesondere für Fahrräder, mit einem mit Dämpfungsfluid gefüllten Dämpfungsraum, mit einem Zugstufenkolben zur Dämpfung der Zugstufe, der in den Dämpfungsraum eingreift und relativ zu diesem beweglich ist, und mit einem Reservoir, zur Aufnahme von verdrängtem Dämpfungsfluid beim Einfedern.

Bei Fahrrädern, insbesondere bei Mountainbikes, hat sich die Verwendung von Federgabeln mittlerweile durchgesetzt, da sie eine wesentliche Steigerung der Fahrsicherheit und des Fahrkomforts bewirken.

Federgabeln weisen allgemein eine Federung und eine Dämpfung auf. Die Dämpfung ist dabei unterteilt in eine Druckstufendämpfung zur Dämpfung des Einfedervorgangs, die sogenannte Druckstufe, und eine Zugstufendämpfung zur Dämpfung des Ausfedervorgangs, die sogenannte Zugstufe. Bei den meisten Federgabeln sind die beiden Dämpfer in einer Dämpfereinheit angeordnet, in der Dämpfungsöl durch unterschiedliche Kanäle strömt und dadurch die Bewegung gedämpft wird. Die Zugstufendämpfung und/oder die Druckstufendämpfung können dabei individuell einstellbar oder werkseitig voreingestellt sein.

In der US 7,163,222 B2 ist beispielsweise eine solche Federgabel dargestellt, wobei die Federung in einem Gabelholm und die Dämpfereinheit in dem anderen Gabelholm untergebracht ist. Jeder Gabelholm weist ein Standrohr und ein Tauchrohr auf, wobei das Standrohr passgenau in das Tauchrohr eintaucht. Die Standrohre sind an ihren oberen Enden über eine Gabelkrone verbunden. Die Dämpfereinheit weist einen Druckstufendämpfer auf, der im Bereich der Gabelkrone im Standrohr angeordnet ist. Die Kolbenstange eines Zugstufenkolbens ist ebenfalls im Bereich der Gabelkrone mit dem Standrohr verbunden. Der Zugstufenkolben taucht zur Zugstufendämpfung in einen Dämpfungsraum ein, der im unteren Bereich des Tauchrohres angeordnet ist, aber teilweise bis in das Standrohr hineinreicht. Der Dämpfungsraum ist mit einem Dämpfungsöl gefüllt. Am unteren Ende des Dämpfungsraumes ist ein feststehendes Basis-Ventil angeordnet, das den Innenraum des Dämpfungsraums mit dem Innenraum des Tauchrohres verbindet, wobei das Tauchrohr als Reservoir dient.
Innerhalb der Zugstufen-Kolbenstange ist ein Kanal angeordnet, der den Dämpfungsraum mit dem Druckstufendämpfer verbindet. Beim Einfedern der Federgabel wandert der Zugstufenkolben in dem Dämpfungsraum weiter nach unten. Dabei wird ein Teil des Dämpfungsöls durch den Kanal innerhalb des Zugstufenkolbens bis zum Druckstufendämpfer gedrückt, wo eine Dämpfung der Bewegung erfolgt. Das Öl gelangt von dort durch das Standrohr in das im Tauchrohr angeordnete Reservoir zurück. Ein anderer Teil des Öls wird durch Öffnungen im Kolben auf dessen andere Seite gedrückt, wobei die Öffnungen mit einer durch eine Spiralfeder vorgespannten Abdeckscheibe abgedichtet sind.

Beim Ausfedern bewegt sich der Zugstufenkolben nach oben und erzeugt in dem Dämpfungsraum einen Unterdruck, durch den das Öl aus dem Reservoir in den Dämpfungsraum zurück gesaugt wird.
Diese Art der Dämpfung erfordert einen hohen konstruktiven Aufwand, da die Innenräume des Standrohres und des Tauchrohres vollständig mit dem Dämpfungsöl in Kontakt kommen. Dementsprechend müssen alle Bestandteile aufwändig nach außen abgedichtet sein, damit kein Öl austreten kann. Zudem muss die Kolbenstange mit einem Kanal versehen werden, wodurch die Herstellung aufwändig und teuer ist.

Vergleichbare Dämpfer mit einem Zug- und Druckstufenkolben sind auch aus der DE 34 18 793 A1 und der DE 937 624 bekannt, wobei hier das Reservoir koaxial um den Dämpferzylinder herum angeordnet ist. Das Reservoir und der Dämpferzylinder erfordern daher eine aufwändige Abdichtung. Der Ölfluss findet bei dieser Ausführung ausschließlich durch Öffnungen in den Kolben statt, die durch eine Abdeckscheibe abgedichtet sind. Die Vorspannung der Abdeckscheibe erfolgt hier jedoch durch eine Tellerfeder und nicht durch eine Spiralfeder.

Bei beiden Anordnungen ist zudem das Ölvolumen relativ groß, so dass viel Dämpfungsöl zum Füllen benötigt wird, wodurch das Gewicht der Federgabel erhöht wird.

Aufgabe der Erfindung ist es daher, eine Dämpfereinheit für eine Federgabel oder ein Federbein zu schaffen, die einfacher aufgebaut und mit weniger Öl benutzbar ist.

Diese Aufgabe wird erfindungsgemäß dadurch gelöst, dass in dem Dämpfungsraum ein Druckstufenkolben zur Dämpfung der Druckstufe angeordnet ist.

Durch die Anordnung der Druckstufendämpfung in Form eines Druckstufenkolbens innerhalb des Dämpfungsraumes wird der Aufbau der Dämpfereinheit wesentlich vereinfacht, da das Dämpfungsfluid nicht mehr durch einen Kanal in der Zugstufen-Kolbenstange zu dem entfernt sitzenden Druckstufendämpfer geführt werden muss.

Dabei ist es vorteilhaft, wenn der Dämpfungsraum vollständig innerhalb des Standrohres angeordnet ist, da dadurch die Montage wesentlich vereinfacht wird und der Dichtungsaufwand gering ist.

Zweckmäßigerweise ist der Dämpfungsraum im wesentlichen zylinderförmig ausgebildet und koaxial innerhalb des Standrohres angeordnet, so dass zwischen Dämpfungsraum-Außenwand und Standrohr-Innenwand ein Spalt gebildet ist. Durch den verminderten Durchmesser im Vergleich zu dem Standrohr ist das Volumen des Dämpfungsraumes verringert, wodurch weniger Dämpfungsfluid notwendig ist. Dadurch ergibt sich auch eine Gewichtsersparnis.

Mit der Anordnung des Dämpfungsraumes im Standrohr ist es besonders zweckmäßig, wenn der Zugstufenkolben an dem Tauchrohr befestigt ist. Dadurch ergibt sich insgesamt eine einfache Anordnung der Dämpfereinheit innerhalb der Gabel oder des Federbeins. Beim Einfedern taucht somit das Standrohr in das Tauchrohr ein und mit dem Standrohr wird der Dämpfungsraum in Richtung Zugstufenkolben bewegt. Relativ betrachtet taucht der Zugstufenkolben also weiter in den Dämpfungsraum ein.

Durch diesen Eintauchvorgang wird Dämpfungsfluid in dem Dämpfungsraum verdrängt, so dass es vorteilhaft ist, wenn das Reservoir für das überströmende Dämpfungsfluid in dem Standrohr angeordnet ist. Zweckmäßigerweise liegt das Reservoir im wesentlichen am dem, dem Zugstufenkolben gegenüberliegenden Ende des Dämpfungsraumes. Durch die im wesentlichen lineare Anordnung der einzelnen Funktionselemente ist ein besonders einfacher Aufbau der Dämpfereinheit möglich.

Darüber hinaus sind bei der erfindungsgemäßen Dämpfereinheit außerhalb des Dämpfungsraumes und des Reservoirs keine weiteren Bauteile mit dem Dämpfungsfluid in Kontakt. Der Dichtungsaufwand und die Gefahr, dass Dämpfungsfluid austritt, sind dadurch im Vergleich zum Stand der Technik wesentlich reduziert.

Vorteilhaft ist, wenn der Dämpfungsraum eine direkte Öffnung zum Reservoir aufweist, durch die Dämpfungsfluid ungehindert zwischen dem Dämpfungsraum und dem Reservoir hin und her strömen kann. Dadurch wird der Fluss des Dämpfungsfluids nicht noch weiter gebremst und es werden keine weiteren Bauteile benötigt.

Insbesondere vorteilhaft ist es, wenn der Druckstufenkolben im wesentlichen technisch identisch zum Zugstufenkolben ausgebildet ist. Dadurch verringert sich der Entwicklungsaufwand und die Dämpfereinheit kann kostengünstiger hergestellt werden.

Eine Ausführung der erfindungsgemäßen Dämpfereinheit für die eigenständiger Schutz beantragt wird, zeichnet sich dadurch aus, dass die Dämpfereinheit zur Dämpfung der Druckstufe eine Plattenventil-Dämpfung aufweist.
Das Plattenventil weist bevorzugt ein Losbrechmoment auf, das durch eine Vorspannung des Plattenventils realisiert ist. Durch das Losbrechmoment wird erreicht, dass das Ventil nicht sofort öffnet, sondern erst bei einer Druckbeaufschlagung, die größer als die Vorspannung ist. Dadurch wird verhindert, dass die Dämpfung schon bei geringer Belastung anspricht und unnötig einfedert, wie beispielsweise beim Fahren im Wiegetritt.

Die Vorspannung ist bevorzugt durch zwei voneinander beabstandete Scheiben realisiert, wobei zwischen den beiden Scheiben des Plattenventils wenigstens ein Abstandshalter angeordnet sein kann. Zweckmäßig ist dabei, wenn der Abstand zwischen den beiden Scheiben im Außen-Bereich des Plattenventils größer ist als der Abstand im Innen-Bereich. Dadurch wird die obere Scheibe im Außen-Bereich stärker gewölbt und erzeugt somit die Vorspannung für das Plattenventil.
Das Losbrechmoment bestimmt bei der Plattenventil-Dämpfung wesentlich den Startpunkt der Dämpfungskennlinie. Durch die Wahl der Vorspannung, das heißt durch Variation des Abstands zwischen den Scheiben, lässt sich die Dämpfungskennlinie parallel verschieben. Die Form der Kennlinie an sich ist hingegen durch andere Parameter bestimmt.

Insbesondere ist die Plattenventil-Dämpfung besonders zweckmäßig mit dem erfindungsgemäßen Druckstufenkolben kombinierbar, so dass eine einfach zu realisierende und günstig herstellbare Druckstufendämpfung vorliegt.

Weitere vorteilhafte Merkmale der erfindungsgemäßen Dämpfereinheit ergeben sich aus den Unteransprüchen und den Zeichnungen, die nachfolgend näher erläutert sind.

Es zeigt:
- Fig. 1: eine Längsschnitt-Ansicht einer erfindungsgemäßen Dämpfereinheit und
- Fig. 2: eine Detailansicht des Druckstufenkolbens.

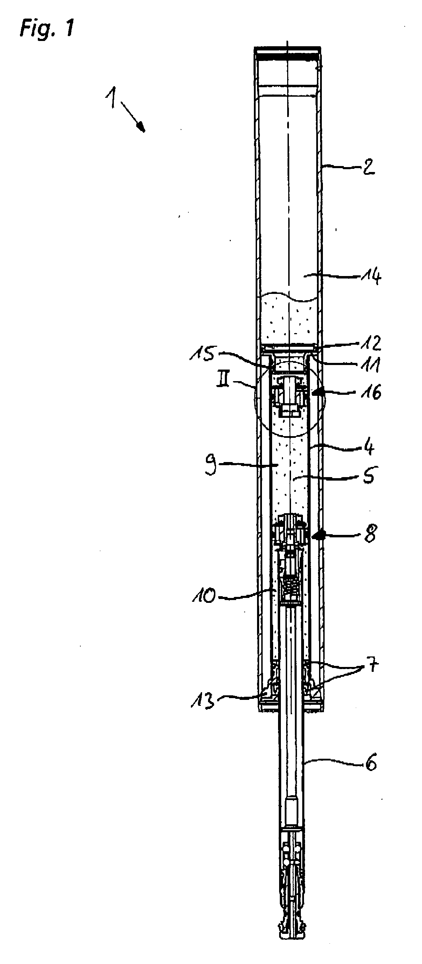

Die Figur 1 zeigt einen Längsschnitt durch eine im Ganzen mit 1 bezeichnete Dämpfereinheit einer Federgabel für ein Fahrrad, insbesondere Mountainbike. Die Federgabel weist ein Standrohr 2 mit rundem Querschnitt auf, das am oberen Ende mit einer nicht näher gezeigten Gabelkrone verbunden ist und mit dem unteren Ende in ein nicht gezeigtes Tauchrohr passgenau eintaucht.

Die Dämpfereinheit 1 weist einen zylinderförmigen Dämpfungsraum 4 auf, der durch ein koaxial in dem Standrohr 2 angeordnetes, an beiden Enden offenes Ölreduzierrohr gebildet ist. Das untere Ende des Ölreduzierrohrs 4 ist am unteren Ende des Standrohres 2 ausgerichtet und mittels eines in das Ölreduzierrohr 4 eingesetzten Flansches 13 befestigt. Das Ölreduzierrohr 4 ist vollständig mit Dämpfungsöl 5 gefüllt.
Eine am unteren Ende des Tauchrohres befestigte Kolbenstange 6 greift von unten in das untere Ende des Ölreduzierrohrs 4 ein. An der Durchtrittsstelle in dem Flansch 13 ist eine Gleitdichtung 7 angeordnet, die den Dämpfungsraum 4 nach unten abdichtet, so dass kein Dämpfungsöl 5 aus dem Dämpfungsraum 4 in das Tauchrohr entweichen kann.
Am Ende der Kolbenstange 6 ist ein Zugstufenkolben 8 einer an sich bekannten Zugstufendämpfung angeordnet, wobei der Zugstufenkolben 8 innerhalb des Dämpfungsraumes 4 beweglich ist und den Dämpfungsraum 4 in eine Druckkammer 9 und eine Ausweichkammer 10 teilt.

Am oberen Ende des Ölreduzierrohres 4 ist ein radialer, nach außen gerichteter Flansch 11 angeordnet, der über eine Dichtung 12 mit der Innenwand des Standrohres 2 verbunden ist. Oberhalb des Ölreduzierrohres 4 dient der Innenraum des Standrohres 2 als Reservoir 14 für das Dämpfungsöl 5. Das Reservoir 14 ist über das obere offene Ende 15 des Ölreduzierrohres 4 mit der Druckkammer 9 verbunden.

Gegenüber dem Zugstufenkolben 8 ist im Bereich der oberen Öffnung 15 des Dämpfungsraumes 4 ein Druckstufenkolben 16 zur Druckstufendämpfung angeordnet, der fest mit der Wand 17 des Ölreduzierrohres 4 verbunden ist, bevorzugt durch eine Einrollverbindung 30.

Im entspannten Zustand der Dämpfereinheit 1 liegt der Zugstufenkolben 8 am unteren Ende des Dämpfungsraumes 4 an. Beim Einfedern der Dämpfereinheit 1 taucht das Standrohr 2 weiter in das Tauchrohr ein, wodurch auch der Dämpfungsraum 4 nach unten bewegt wird. Dadurch wird der Zugstufenkolben 8 relativ zum Dämpfungsraum 4 nach oben bewegt. Das Dämpfungsfluid 5 strömt dabei durch Öffnungen im Zugstufenkolben 8 aus der Druckkammer 9 in die Ausweichkammer 10. Durch die Volumenverdrängung der Kolbenstange 6 steigt der Ölstand jedoch insgesamt an, so dass Dämpfungsöl 5 aus dem Dämpfungsraum 4 in das Reservoir 14 verdrängt wird.
Das Dämpfungsöl 5 strömt dabei durch den Druckstufenkolben 16, der eine Dämpfung der Fluid-Strömung und damit des Einfedervorgangs bewirkt.

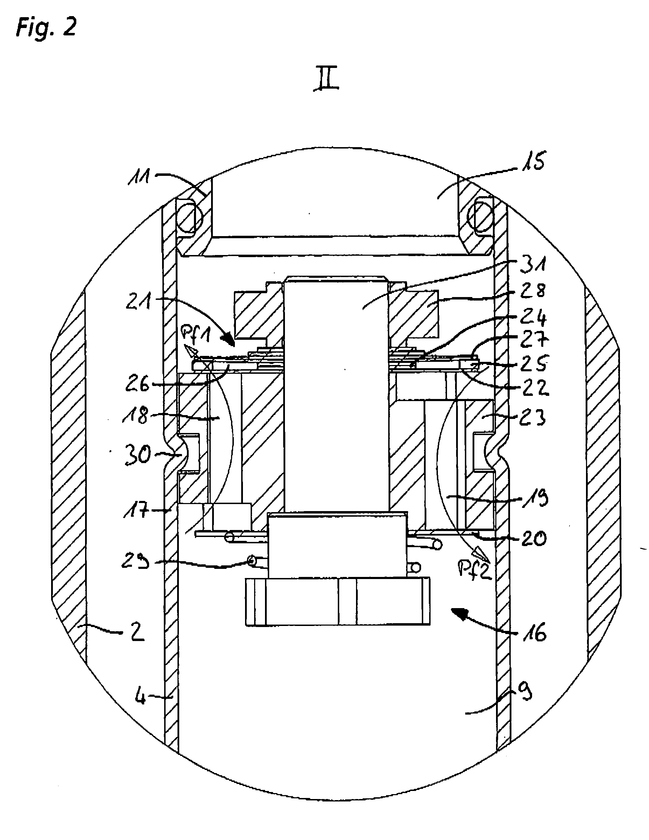

Figur 2 zeigt eine Detailansicht des Druckstufenkolbens 16. Beim Einfedern fließt das Dämpfungsöl 5 in Pfeilrichtung Pf1 durch die links gezeigte Druckstufen-Öffnung 18 in dem Kolben 23 aus der Druckkammer 9 in das Reservoir 14. Die ZugstufenÖffnung 19 auf der rechten Seite ist durch ein Rückschlagventil 20 auf der Druckkammerseite verschlossen.
Die Druckstufen-Öffnung 18 wird auf der Reservoirseite durch ein Plattenventil 21, ein sogenanntes Shimpaket, abgedichtet. Das Plattenventil 21 weist eine Abdeckscheibe 22 auf, die direkt auf dem Kolben 23 aufliegt und die Druckstufen-Öffnung 18 abdeckt. Auf der Abdeckscheibe 22 sind im Innen-Bereich eine oder mehrere Vorspannscheiben 24 angeordnet, die einen geringeren Außen-Durchmesser aufweisen als die Abdeckscheibe 22. Am Außenumfang der Abdeckscheibe 22 ist im Außen-Bereich wenigstens eine Steuerscheibe 25 aufgesetzt, die die gleiche oder eine größere Dicke aufweist als die Vorspannscheibe 24. Die Steuerscheibe 25 hat den gleichen Außendurchmesser wie die Abdeckscheibe 22, jedoch einen größeren Innen-Durchmesser. Zwischen Vorspannscheibe 24 und Steuerscheibe 25 ist dadurch ein Hohlraum 26 gebildet. Die Vorspannscheibe 24 und die Steuerscheibe 25 können jedoch auch in einem Teil ausgebildet sein.
Auf der Vorspannscheibe 24 und der Steuerscheibe 25 ist eine Stützscheibe 27 angeordnet, die von der Größe her der Abdeckscheibe 22 entspricht und die durch eine Mutter 28 auf der zentralen Kolbenstange 31 am Innenumfang auf die Vorspannscheibe 24 gedrückt wird.

Durch die unterschiedliche Dicke der Vorspannscheibe 24 und der Steuerscheibe 25 ergibt sich eine Vorspannung auf die Abdeckscheibe 22, die zu einem definierten Losbrechmoment für das Plattenventil 21 führt. Das Dämpfungsfluid 5 kann das Plattenventil 21 dadurch erst öffnen, wenn der Öldruck in der Druckkammer 9 die Vorspannung des Plattenventils 21 übersteigt. Dadurch erhält die Druckstufendämpfung eine Kennlinie, die erst bei einer Mindestkraft startet, die im wesentlichen der Vorspannung des Plattenventils entspricht. Durch Austausch der Vorspannscheibe 24 und/oder der Steuerscheibe 25 ist eine Veränderung der Vorspannung und damit eine Verschiebung der Kennlinie auf der Kraftachse möglich. Durch vergrößern der Vorspannung verschiebt sich die Kennlinie im wesentlichen parallel nach oben hin zu größeren Kräften, durch verringern der Vorspannung wird die Kennlinie 34 zu geringeren Kräften verschoben. Die Form der Kennlinie wird dadurch jedoch nicht beeinflusst. Durch die einfache Anpassung der Kennlinie durch die Vorspannung wird zum einen Gewicht gespart, da keine aufwändige Einstellmechanik vorgesehen sein muss und gleichzeitig die Zuverlässigkeit erhöht, da auch keine beweglichen Teile notwendig sind.

Beim Ausfedern bewegt sich der Zugstufenkolben 8 aus dem Dämpfungsraum 4 heraus, wobei Dämpfungsfluid 5 aus der Ausweichkammer 10 durch den Zugstufenkolben 8 fließt und dort durch ein Plattenventil gedämpft wird, wobei das Zugstufen-Plattenventil im wesentlichen technisch identisch aufgebaut ist, wie das Druckstufen-Plattenventil 21.
Am Druckstufenkolben 16 schließt das Plattenventil 21 selbstständig und durch den entstehenden Unterdruck in der Druckkammer 9 wird das Rückschlagventil 20 an der ZugstufenÖffnung 19 geöffnet, wobei das Rückschlagventil 20 durch eine Spiralfeder 29 abgestützt ist. Das Dämpfungsfluid 5 kann so in Pfeilrichtung Pf2 aus dem Reservoir 14 zurück in die Druckkammer 9 strömen.

## Patentansprüche

1. Dämpfereinheit für eine Federgabel oder ein Dämpferbein, insbesondere für Fahrräder, mit einem mit Dämpfungsfluid (5) gefüllten Dämpfungsraum (4), mit einem Zugstufenkolben (8) zur Dämpfung der zugstufe, der in den Dämpfungsraum (4) eingreift und relativ zu diesem beweglich ist, und mit einem Reservoir (14), zur Aufnahme von verdrängtem Dämpfungsfluid beim Einfedern, **dadurch gekennzeichnet, dass** in dem Dämpfungsraum (4) ein Druckstufenkolben (16) zur Dämpfung der Druckstufe angeordnet ist.

2. Dämpfereinheit nach Anspruch 1, **dadurch gekennzeichnet, dass** der Druckstufenkolben (16) zumindest eine Öffnung (18) zum Durchströmen von Dämpfungsfluid (5) während der Druckstufe aufweist.

3. Dämpfereinheit nach einem der Ansprüche 1 oder 2, **dadurch gekennzeichnet, dass** die Druckstufenöffnung (18) ein Plattenventil (21) aufweist, das die Druckstufenöffnung (18) während der Zugstufe abdichtet.

4. Dämpfereinheit nach einem der Ansprüche 1 bis 3, **dadurch gekennzeichnet, dass** der Druckstufenkolben (16) zumindest eine Öffnung (19) zum Durchströmen von Dämpfungsfluid (5) während der Zugstufe aufweist.

5. Dämpfereinheit nach einem der Ansprüche 1 bis 4, **dadurch gekennzeichnet, dass d**ie Zugstufenöffnung (19) ein Rückschlagventil (20) aufweist, das die Zugstufenöffnung (19) während der Druckstufe abdichtet.

6. Dämpfereinheit nach einem der Ansprüche 1 bis 5, **dadurch gekennzeichnet, dass** der Dämpfungsraum (4) vollständig innerhalb des Standrohres (2) angeordnet und fixiert ist.

7. Dämpfereinheit nach einem der Ansprüche 1 bis 6, **dadurch gekennzeichnet, dass** der Dämpfungsraum (4) im wesentlichen zylinderförmig ausgebildet ist und dass zwischen Dämpfungsraum-Außenwand und Standrohr-Innenwand ein Spalt gebildet ist.

8. Dämpfereinheit nach einem der Ansprüche 1 bis 7, **dadurch gekennzeichnet, dass** der Zugstufenkolben (8) an dem Tauchrohr befestigt ist.

9. Dämpfereinheit nach einem der Ansprüche 1 bis 8, **dadurch gekennzeichnet, dass** das Reservoir (14) für das,überströmende Dämpfungsfluid (5) in dem Standrohr (2) angeordnet ist.

10. Dämpfereinheit nach einem der Ansprüche 1 bis 9, **dadurch gekennzeichnet, dass** der Dämpfungsraum (4) eine direkte Öffnung (15) zum Reservoir (14) aufweist, durch die Dämpfungsfluid (5) ungehindert zwischen dem Dämpfungsraum (4) und dem Reservoir (14) hin und her strömen kann.

11. Dämpfereinheit nach einem der Ansprüche 1 bis 10, **dadurch gekennzeichnet, dass** das Reservoir (14) im wesentlichen am dem dem Zugstufenkolben (8) gegenüberliegenden Ende des Dämpfungsraumes (4) angeordnet ist.

12. Dämpfereinheit nach einem der Ansprüche 1 bis 11, **dadurch gekennzeichnet, dass** der Druckstufenkolben (16) gegenüber dem Zugstufenkolben (8) angeordnet ist.

13. Dämpfereinheit nach einem der Ansprüche 1 bis 12, **dadurch gekennzeichnet, dass** der Druckstufenkolben (16) im wesentlichen technisch identisch zum Zugstufenkolben (8) ausgebildet ist.

14. Dämpfereinheit für eine Federgabel oder ein Dämpferbein, insbesondere für Fahrräder, mit einem mit Dämpfungsfluid (5) gefüllten Dämpfungsraum (4), mit einem Zugstufenkolben (8) zur Dämpfung der Zugstufe, der in den Dämpfungsraum (4) eingreift und relativ zu diesem beweglich ist, und mit einem Reservoir (14), zur Aufnahme von verdrängtem Dämpfungsfluid beim Einfedern, **dadurch gekennzeichnet, dass** die Dämpfereinheit zur Dämpfung der Druckstufe eine Plattenventil-Dämpfung aufweist.

15. Dämpfereinheit nach einem der Ansprüche 1 bis 14, **dadurch gekennzeichnet, dass** das Plattenventil (21) ein Losbrechmoment aufweist, das durch eine Vorspannung des Plattenventils (21) realisiert ist.

16. Dämpfereinheit nach einem der Ansprüche 1 bis 15, **dadurch gekennzeichnet, dass** die Vorspannung des Plattenventils (21) durch zwei voneinander beabstandete Scheiben (22, 27) realisiert ist.

17. Dämpfereinheit nach einem der Ansprüche 1 bis 16, **dadurch gekennzeichnet, dass** der Abstand zwischen den beiden Scheiben (22, 27) im Außen-Bereich des Plattenventils (21) gleich oder größer ist als im Innen-Bereich.

18. Dämpfereinheit nach einem der Ansprüche 1 bis 17, **dadurch gekennzeichnet, dass** zwischen den beiden Scheiben (22, 27) des Plattenventils (21) wenigstens ein Abstandshalter angeordnet ist.

19. Dämpfereinheit nach einem der Ansprüche 1 bis 18, **dadurch gekennzeichnet, dass** zwischen den beiden Scheiben (22, 27) des Platten-Ventils (21) im Innen-Bereich wenigstens eine Vorspannscheibe (24) und im Außen-Bereich wenigstens eine Steuerscheibe (25) angeordnet ist.

20. Dämpfereinheit nach einem der Ansprüche 1 bis 19, **dadurch gekennzeichnet, dass** durch Veränderung des Losbrechmoments die Kennlinie der Plattentventil-Dämpfung einstellbar ist.
